# EUROPEAN PATENT APPLICATION

(11) **EP 4 635 799 A1**
(43) Date of publication of application: **22.10.2025**
(21) Application number: 22968543.3
(22) Date of filing: 16.12.2022
(51) Int. Cl.: B60Q 1/50

(54) **LIGHT DISTRIBUTION CONTROL SYSTEM AND LIGHT DISTRIBUTION CONTROL METHOD**

(71) Applicant: Astemo, Ltd., Tokyo 100-0004 (JP)
(72) Inventor: OTSUKA Hiromichi, Hitachinaka-shi, Ibaraki 312-8503 (JP); DOI Koji, Hitachinaka-shi, Ibaraki 312-8503 (JP)
(74) Representative: MERH-IP Matias Erny Reichl Hoffmann Patentanwälte PartG mbB
(86) International application number: PCT/JP2022/046378
(87) International publication number: WO 2024/127633

(57) **Abstract**

Vehicle-external recognition is performed, and light distribution control over headlights mounted on a vehicle is performed based on the vehicle-external recognition. A configuration includes an external sensor that acquires information about an object around the vehicle, and a ground speed acquisition unit that acquires a ground speed of the object based on an output from the external sensor. An emission range of the headlights is variably set based on the ground speed acquired by the ground speed acquisition unit.

## Description

### Technical Field

The present invention relates to a light distribution control system and a light distribution control method.

### Background Art

In recent years, a vehicle, such as an automobile, equipped with a light distribution control system has been put into practical use. The light distribution control system performs vehicle-external recognition and controls light distribution of vehicle headlights based on the recognition result.

The light distribution control mounted on the vehicle incudes a function called auto high beam (AHB) that recognizes an oncoming vehicle and a preceding vehicle using an external-recognition sensor such as an in-vehicle camera, automatically performs switching to a low beam, and automatically performs switching to a high beam after passing by the oncoming vehicle and the preceding vehicle. Further, there is a function called adaptive driving beam (ADB) that shields regions of a recognized oncoming vehicle and preceding vehicle from light and irradiates a region other than the shielded regions with a high beam.

In order to correctly shield other vehicles such as an oncoming vehicle and a preceding vehicle from light, an external-recognition sensor needs to accurately determine a vehicle or a non-vehicle. PTL 1 describes a technique of narrowing down a light spot of tail lamps or headlights based on a shape and determining a vehicle based on a moving direction and speed. However, the conventional technique does not always make it possible to appropriately determine a vehicle, that is, may make detection of a light spot difficult due to disturbance, or may make it impossible to recognize a non-lighting vehicle. Therefore, in a case where these vehicles cannot be recognized, daze is given to a driver of another vehicle.

### Citation List

### Patent Literature

PTL 1: JP 2019-156276 A

### Summary of Invention

### Technical Problem

When automatic light distribution control is performed, it is not preferable to irradiate another vehicle with a high beam. However, as described above, in a case where detection of a light of another vehicle is difficult due to disturbance, or in a case of a vehicle with no lighting, a high beam is likely to be emitted because the light of another vehicle cannot be detected. Therefore, it has been desired to develop a technology capable of performing the light distribution control even with a method other than the detection of light of a vehicle.

Further, when a vehicle is recognized on an image, erroneous detection may occur due to a roadside object or the like. In a case where a roadside object is erroneously detected as a vehicle, switching to a low beam erroneously occurs. Therefore, it has been desired to prevent erroneous detection of a roadside object or the like as much as possible.

An object of the present invention is to provide a light distribution control system and a light distribution control method capable of satisfactorily detecting another vehicle and preventing erroneous detection of an object other than a vehicle.

### Solution to Problem

In order to solve the above problem, for example, the configurations described in the claims are adopted.

The present application includes a plurality of means for solving the above problems. As an example of such means, the light distribution control system of the present invention performs vehicle-external recognition and performs the light distribution control over headlights mounted on the vehicle, based on the vehicle-external recognition.

Here, the light distribution control system according to an example of the present invention includes an external sensor that acquires information about an object around a vehicle, and a ground speed acquisition unit that acquires a ground speed of the object based on an output from the external sensor. An emission range of headlights can be variably set based on the ground speed acquired by the ground speed acquisition unit.

### Advantageous Effects of Invention

According to the present invention, the ground speed of an object is acquired and the emission of headlights of a self-vehicle is controlled when the ground speed becomes greater than or equal to a threshold. As a result, the emission of a high beam to another vehicle can be prevented with a method other than detection of light of a vehicle.

Problems, configurations, and effects other than those described above will be clarified by the following description of embodiments.

### Brief Description of Drawings

[FIG. 1] FIG. 1 is a block diagram illustrating a configuration example of a light distribution control system according to a first embodiment of the present invention.
[FIG. 2] FIG. 2 is a block diagram illustrating a hardware configuration example of a recognition processing device included in the light distribution control system according to the first embodiment of the present invention.
[FIG. 3] FIG. 3 is a flowchart showing light distribution control processing according to the first embodiment of the present invention.
[FIG. 4] FIG. 4A is a view illustrating an example (Example 1) of candidates to be shielded from light, and FIG. 4B is a view illustrating an example of a state in which a light shielding target is selected from the candidates to be shielded from light illustrated in FIG. 4A.
[FIG. 5] FIG. 5A is a view illustrating an example (Example 2) of candidates to be shielded from light, and FIG. 5B is a view illustrating an example of a state in which a target not to be shielded from light is selected from the candidates not to be shielded from light illustrated in FIG. 5A.
[FIG. 6] FIG. 6 is a block diagram illustrating a configuration example of a light distribution control system according to a second embodiment of the present invention.
[FIG. 7] FIG. 7 is a flowchart showing light distribution control processing according to the second embodiment of the present invention.

### Description of Embodiments

### <First Embodiment>

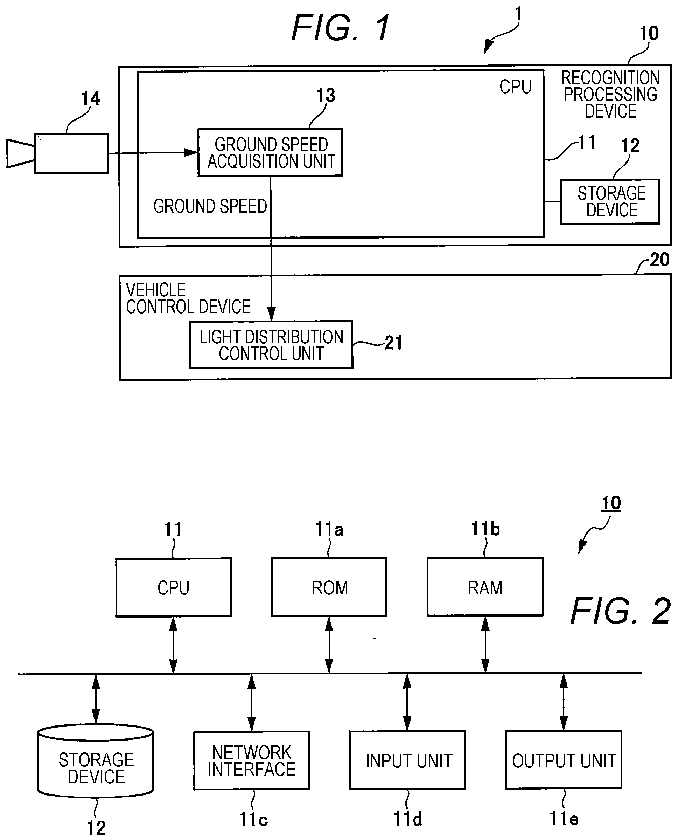

Hereinafter, a light distribution control system and a light distribution control method according to the first embodiment of the present invention will be described with reference to FIGS. 1 to 5.

### [Configuration of light distribution control system]

FIG. 1 illustrates a configuration of the light distribution control system according to the present embodiment.

The light distribution control system 1 illustrated in FIG. 1 is mounted on a vehicle including headlights (not illustrated), and includes a recognition processing device 10 and a vehicle control device 20. The vehicle control device 20 performs light distribution control over the headlights of the vehicle based on the result recognized by the recognition processing device 10.

The light distribution control system 1 further includes an external sensor 14 that is installed ahead of the vehicle and acquires information about the front of the vehicle. The external sensor 14 is a sensor that executes external sensing processing for acquiring vehicle ahead and periphery information. As the external sensor 14, a stereo camera, a monocular camera, a millimeter wave radar, a light detection and ranging (LiDAR), or the like can be used.

The stereo camera captures vehicle ahead and periphery images with a plurality of cameras. The monocular camera captures vehicle ahead and periphery images with one camera. The millimeter wave radar acquires a distance and angle of an object ahead and periphery of the vehicle. The LiDAR acquires three-dimensional vehicle ahead and periphery information.

Note that, as the external sensor 14, these sensors are used alone or the monocular camera, the millimeter wave radar, and the like are used in combination. Further, sensors other than the above sensors can be used as long as the sensors perform sensing the periphery of the vehicle.

The recognition processing device 10 and the vehicle control device 20 are both computers. FIG. 2 illustrates a hardware configuration example of the recognition processing device 10 and the vehicle control device 20 as the computers. Note that, although FIG. 2 illustrates the recognition processing device 10, the vehicle control device 20 can also have a hardware configuration similar to that of the recognition processing device 10.

The recognition processing device 10 includes a central processing unit (CPU) 11 that is a processor, a read-only memory (ROM) 11a, a random-access memory (RAM) 11b, a storage device 12, a network interface 11c, an input unit 11d, and an output unit 11e.

The CPU 11 may be configured by a micro processor unit (MPU). As the storage device 12, for example, a hard disk drive (HDD), a solid state drive (SSD), a semiconductor memory, or the like is used. The storage device 12 may be configured by the ROM 11a.

The input unit 11d converts various types of information input from the external sensor 14 to the recognition processing device 10 or the vehicle control device 20 into information that can be computed by the CPU 11. The ROM 11a and the storage device 12 are recording media that respectively store a control program for appropriately executing computation processing to be described later, and various types of information necessary for executing the computation processing.

The CPU 11 performs predetermined computation processing on a signal input to the input unit 11d and a signal taken in from the ROM 11a, the RAM 11b, or the storage device 12 in accordance with the control program stored in the ROM 11a. A command for controlling an output target, information used by the output target, and the like are output from the output unit 11e. Here, the output target is a light distribution control unit 21 of the vehicle control device 20 in the case of the recognition processing device 10, and is the headlights of the vehicle whose light distribution is controlled in the case of the vehicle control device 20.

Note that, as one example, the recognition processing device 10 and the vehicle control device 20 are configured by the computers including the CPU, and for example, a part or all of the recognition processing device 10 and the vehicle control device 20 may be implemented by dedicated hardware such as a field programmable gate array (FPGA) or an application specific integrated circuit (ASIC).

Returning to the description of the configuration in FIG. 1, the recognition processing device 10 includes a ground speed acquisition unit 13. The ground speed acquisition unit 13 executes ground speed acquisition processing for acquiring a relative speed of an object ahead of the vehicle based on the information acquired by the external sensor 14. For example, the ground speed acquisition unit 13 recognizes an obstacle ahead of the vehicle as a three-dimensional object using three-dimensional information acquired by the stereo camera, the LiDAR, or the like, and acquires the ground speed from time-series data of distance information about the recognized three-dimensional object.

Alternatively, the ground speed acquisition unit 13 calculates a feature amount such as an edge or a color on an image to be recognized or an image other than the recognition target in advance using an image captured by the stereo camera or the monocular camera. In this way, a discriminator learns. The ground speed acquisition unit 13 then discriminates a newly acquired recognition target using the discriminator that has learned. For example, a support vector machine (SVM) or AdaBoost can be used for causing the discriminator to learn.

The ground speed acquisition unit 13 further performs deep learning such as convolutional neural network (CNN) using an image to be recognized or an image other than recognition targets in advance. The ground speed acquisition unit 13 may then recognize the recognition target using the discrimination network learned by the CNN.

Further, after discriminating the recognition targets, the ground speed acquisition unit 13 can estimate information about distances up to the recognition targets based on the image sizes of the recognized targets, and can further acquire the ground speed from time-series data of the information about the distances up to the recognition targets measured by using the sensor such as the millimeter wave radar.

The vehicle control device 20 includes the light distribution control unit 21.

The light distribution control unit 21 controls the light distribution of the headlights of the vehicle based on the ground speed information about the objects such as the vehicles around the self-vehicle, the information being acquired by the ground speed acquisition unit 13 of the recognition processing device 10, and variably sets the emission range of the headlights.

That is, for example, in the case of a vehicle equipped with an auto high beam (AHB) function of automatically switching to a high beam after passing by an oncoming vehicle or a preceding vehicle, the light distribution control unit 21 sets the headlights to a low beam in a situation where the light distribution control is required. In a situation where the light distribution control is not required, the light distribution control unit 21 sets the headlights to a high beam.

Further, in the case of a vehicle equipped with an adaptive driving beam (ADB) function of shielding the region of a recognized oncoming vehicle or preceding vehicle from light and emitting a high beam to a region other than the shielded region, the light distribution control unit 21 shields a corresponding headlight region in the situation where the light distribution control is required, and irradiates the other region with a high beam.

### [Flow of processing for performing light distribution control over headlights]

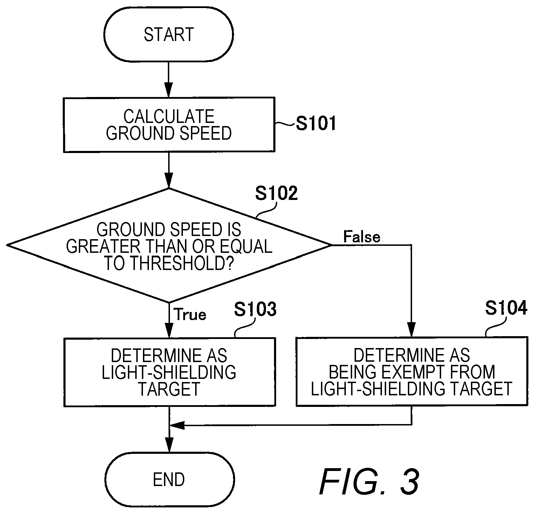

FIG. 3 is a flowchart illustrating a flow of processing for performing the light distribution control over the headlights in the light distribution control system of the present embodiment.

First, the ground speed acquisition unit 13 of the recognition processing device 10 acquires information from the external sensor 14, and calculates to acquire the ground speed of an object around the vehicle based on the information from the external sensor 14 (step S101). The ground speed acquisition unit 13 acquires the ground speed for each object. For example, when an oncoming vehicle and a preceding vehicle are present ahead of the self-vehicle, the ground speed acquisition unit 13 acquires the ground speeds of the oncoming vehicle and the preceding vehicle.

Next, the recognition processing device 10 determines whether the ground speed acquired in step S101 is greater than or equal to a threshold for each object (step S102). Here, the threshold in step S102 is set to, for example, 40 Km/h, which is a constant speed suitable for discriminating a running vehicle and an object on a road.

In step S102, in order to prevent an erroneous determination for a roadside object, a wall, or the like, a method using a plurality of measurement results is conceivable for determining whether the ground speed is greater than or equal to the threshold.

In addition, in a case where an oncoming vehicle and a preceding vehicle travel on the same road, it is considered that the oncoming vehicle and the preceding vehicle also travel at the same speed as that of the self-vehicle. Therefore, the threshold of the ground speed and the number of measurements of the ground speed may be changed based on the self-vehicle speed. Furthermore, in a case where many roadside objects are installed, such as a case of a curve, the possibility of an erroneous determination increases, and thus the threshold of the ground speed and the number of measurements of the ground speed may be changed depending on the curvature of a road on which the self-vehicle is traveling.

Then, in a case where the determination is made in step S102 that the ground speed is greater than or equal to the threshold (True in step S102), the recognition processing device 10 determines that the object is to be shielded from the high beam, and the vehicle control device 20 prevents the headlights from giving daze to the object (step S103). The headlights that do not give daze to an object such as an oncoming vehicle are controlled by, for example, the AHB function or the ADB function.

In a case where the determination is made in step S102 that the ground speed is less than the threshold (False in step S102), the recognition processing device 10 determines that the oncoming vehicle or the like is not a light shielding target, and the vehicle control device 20 prevents the headlights from changing the irradiation of the object with the high beam (step S104).

### [Example of determination state of recognition target]

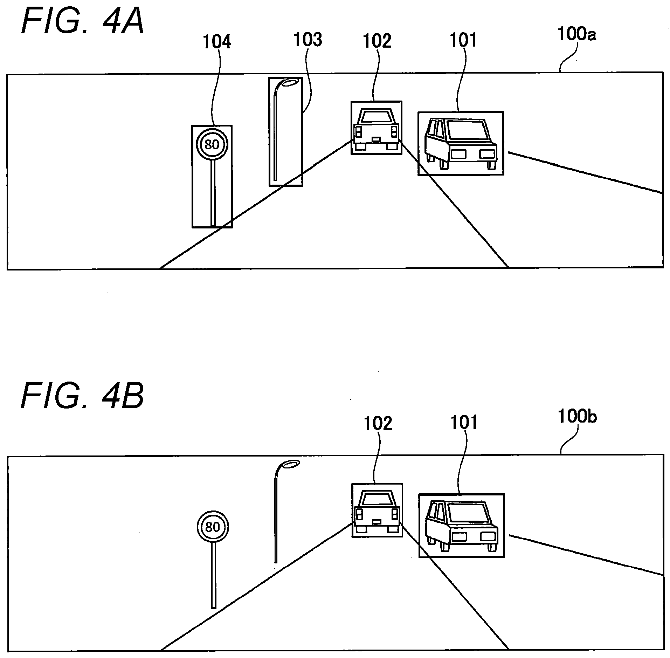

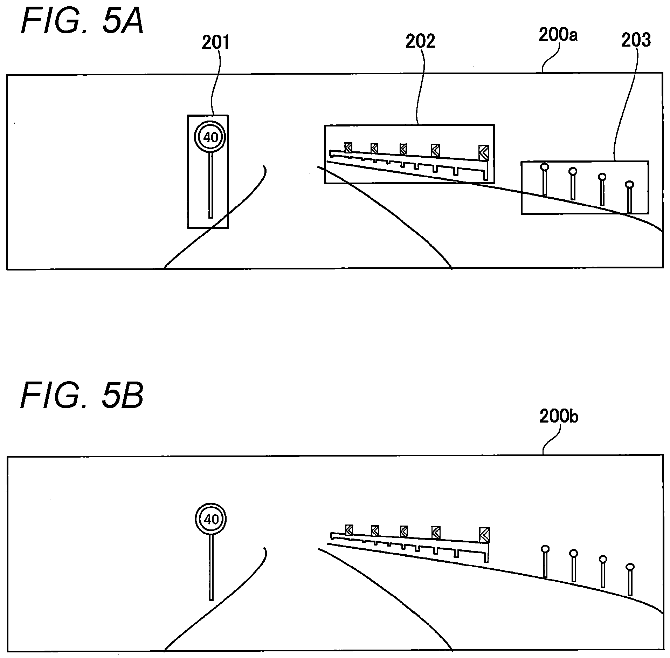

FIGS. 4 and 5 are image diagrams illustrating examples of a determination state according to the present embodiment.

FIGS. 4 and 5 are vehicle ahead images captured by the camera, and portions surrounded by rectangles of each image indicate portions detected as the light shielding targets by the recognition processing device 10.

FIG. 4A shows a captured image 100a in a situation where a preceding vehicle 102, an oncoming vehicle 101, a street lamp 103, and a sign 104 are visible. Since the preceding vehicle 102 and the oncoming vehicle 101 are traveling on the road, the ground speed can be acquired. Therefore, in a case where the determination can be made in step S102 that the acquired ground speed is greater than or equal to the threshold, as illustrated in FIG. 4B, the recognition processing device 10 recognizes the preceding vehicle 102 and the oncoming vehicle 101 as light shielding targets on an image 100b of the recognition result.

Further, since the sign 104 and the street lamp 103 are road installations, the determination is made in step S102 that the ground speeds are less than a certain level, and thus, the recognition processing device 10 does not recognize the sign and the street lamp as light shielding targets on the image 100b of the recognition result.

FIG. 5A shows a captured image 200a in a situation where only roadside objects, such as a sign 201, delineators (arrow type) 202, and delineators (pole type) 203, are visible.

In a situation like the image 200a illustrated in FIG. 5A, the determination is made in step S102 that the ground speeds of the sign 201 and the delineators 202 and 203 are less than a certain level. For this reason, as illustrated in FIG. 5B, the sign 201 and the delineators 202 and 203 are not to be shielded on an image 200b of the recognition result. Therefore, in the case of the AHB function, the light distribution control unit 21 can emit the high beam. Further, even in the ADB function, the light distribution control unit 21 can emit the high beam without shielding from light.

Note that the scenes illustrated in FIGS. 4 and 5 are examples of target scenes, and the determination state according to the present embodiment can cope with various other situations.

As described above, according to the present embodiment, since the recognition processing device 10 determines that an object detected by the external sensor 14 is a light-shielding target only when the ground speed is higher than or equal to a certain speed. Thus, the recognition processing device 10 can reliably distinguish a traveling vehicle from an object fixed on the road and can determine the light-shielding target. Therefore, the emission of the high beam to other vehicles having the ground speed lower than a certain speed can be prevented.

### <Second Embodiment>

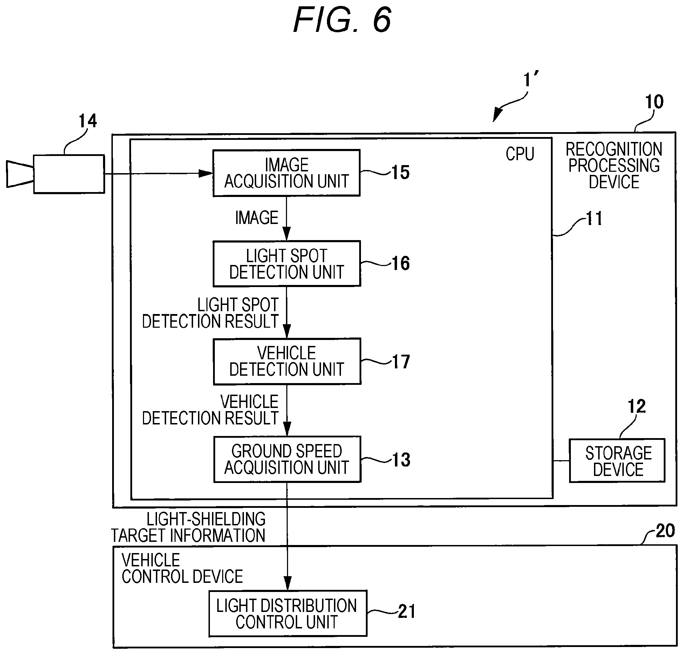

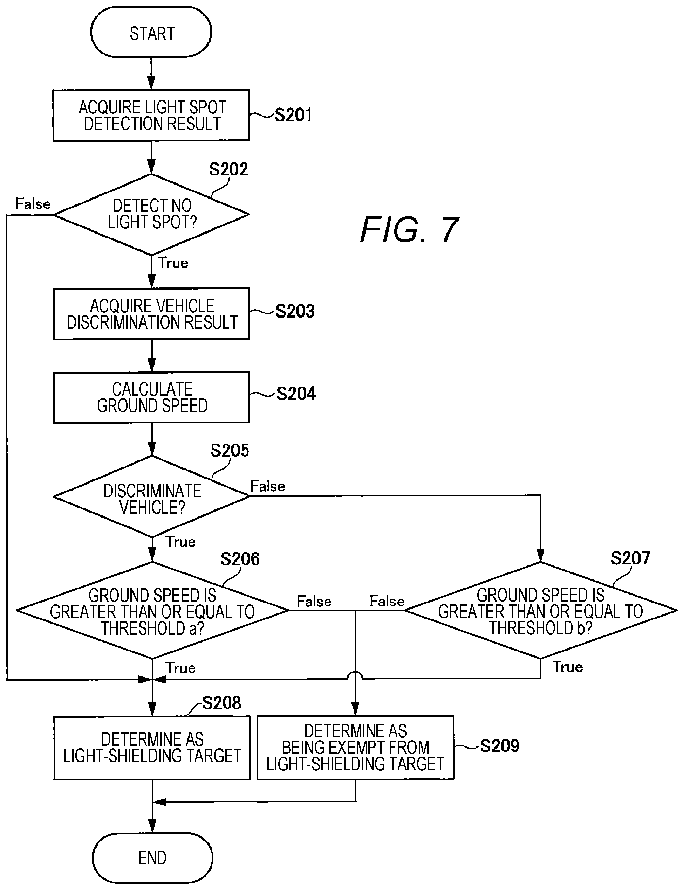

Hereinafter, a light distribution control system and a light distribution control method according to the second embodiment of the present invention will be described with reference to FIGS. 6 and 7. In FIGS. 6 and 7, the same portions as those in FIGS. 1 to 5 described in the first embodiment are denoted by the same reference signs, and redundant description thereof is omitted.

### [Configuration of light distribution control system]

FIG. 6 illustrates a configuration of the light distribution control system according to the present embodiment.

The recognition processing device 10 in the light distribution control system 1' of the present embodiment illustrated in FIG. 6 includes an image acquisition unit 15, a light spot detection unit 16, and a vehicle detection unit 17 in addition to the ground speed acquisition unit 13 described in the first embodiment.

That is, the central processing unit CPU) 11 of the recognition processing device 10 is set to have functions as the image acquisition unit 15, the light spot detection unit 16, the vehicle detection unit 17, and the ground speed acquisition unit 13. Note that the light distribution control system 1' illustrated in FIG. 6 is also configured by the computer illustrated in FIG. 2.

The image acquisition unit 15 acquires an image captured by a camera (stereo camera or monocular camera) as the external sensor 14.

The light spot detection unit 16 detects a pixel having luminance of a certain value or more from the image acquired by the image acquisition unit 15, and integrates regions adjacent to the pixel to form a light spot region. The light spot detection unit 16 further discriminates whether the light spot is a light spot of headlights or tail lamps of a vehicle or other light spots using luminance information about the light spot region, a relative distance from the vehicle, information about the relative position from the vehicle, and the like, thereby discriminating the type of the light spot.

The vehicle detection unit 17 detects a vehicle based on parallax information on an image (in the case of the stereo camera) or a feature of the image. At this time, when detecting the vehicle, the vehicle detection unit 17 can also use machine learning.

That is, the vehicle detection unit 17 discriminates the vehicle with a learned discriminator using the image captured by the stereo camera or the monocular camera.

The learned discriminator calculates feature amounts such as edges and colors on the image of a recognition target and an image other than the recognition target in advance, and performs learning such as support vector machine (SVM) and AdaBoost. The vehicle detection unit 17 then calculates and discriminates a feature amount such as an edge or a color on the image acquired by the image acquisition unit 15, using the learned discriminator.

Alternatively, the discriminator learns in advance a discrimination network based on the image of a recognition target or an image other than the recognition target by using deep learning such as a CNN, and discriminates the recognition target such as a vehicle from the image acquired by the image acquisition unit 15 using the learned network.

The ground speed acquisition unit 13 acquires the ground speed of an object around the vehicle similarly to the first embodiment described with reference to FIG. 1.

Further, the vehicle control device 20 controls the light distribution of the headlights of the vehicle based on each piece of information regarding the object such as a vehicle around the self-vehicle, each piece of information being acquired by the recognition processing device 10.

### [Flow of processing for performing light distribution control over headlights]

FIG. 7 is a flowchart illustrating a flow of processing for performing the light distribution control over the headlights in the light distribution control system of the present embodiment.

First, the light spot detection unit 16 causes the light distribution control unit 21 to recognize a light spot that is a candidate for a light-shielding target on the image acquired by the image acquisition unit 15 (step S201). In step S201, the light spot detection unit 16 then determines whether a light spot is detected (step S202).

In a case where the light spot that is the candidate for the light-shielding target is recognized in step S202 (False in step S202), the recognition processing device 10 determines that the candidate for a light-shielding target for which the light spot has been recognized is the light-shielding target (step S208). The result of determining as the light-shielding target in step S208 is transmitted from the recognition processing device 10 to the vehicle control device 20. As a result, the vehicle control device 20 sets the control state of the headlights to a low beam or a high beam for shielding the corresponding light-shielding target from light.

In a case where the light spot to be the candidate for the light-shielding target is not recognized in step S202 (True in step S202), the vehicle detection unit 17 performs vehicle discrimination on the image acquired by image acquisition unit 15 (step S203).

Further, the ground speed acquisition unit 13 acquires the ground speed of an object around the vehicle (step S204) . In a case where the ground speed is acquired for each object, and for example, an oncoming vehicle and a preceding vehicle are present ahead of the self-vehicle, the ground speeds of the oncoming vehicle and the preceding vehicle are acquired.

Thereafter, the recognition processing device 10 determines whether the vehicle discrimination is made in step S203 (step S205). In a case where a determination is made in step S205 that the vehicle discrimination is made (True in step S205), the recognition processing device 10 determines whether the ground speed acquired in step S204 is greater than or equal to a threshold a (step S206). The threshold a here is, for example, 40 Km/h.

In a case where the determination is made in step S206 that the ground speed is greater than or equal to the threshold a (True in step S206), the recognition processing device 10 determines the corresponding object as a light-shielding target (step S208). The determination for the light-shielding target in step S208 is transmitted from the recognition processing device 10 to the vehicle control device 20, and the vehicle control device 20 brings the headlights into a state corresponding to the determination as to the light-shielding target.

Further, in a case where the determination is made in step S206 that the ground speed is less than the threshold a (False in step S206), the recognition processing device 10 determines the corresponding object as being exempt from a light-shielding target (step S209). In the determination in step S209, even in a case where the vehicle is discriminated in step S203, the recognition processing device 10 determines that a roadside object or the like is likely to be erroneously discriminated, and makes the determination in step S209.

Further, in a case where the determination is made in step S205 that no vehicle is discriminated (False in step S205), a determination is made whether the ground speed acquired in step S204 is greater than or equal to a threshold b (step S207). Here, the threshold b is, for example, 80 Km/h, which is a value greater than the threshold a described above.

In a case where the determination is made in step S207 that the ground speed is greater than or equal to the threshold b (True in step S207), the recognition processing device 10 determines the corresponding object as a light-shielding target (step S208). This determination as to the light-shielding target is transmitted from the recognition processing device 10 to the vehicle control device 20, and the vehicle control device 20 brings the headlights into a corresponding state.

Further, in a case where the determination is made in step S207 that the ground speed is less than the threshold b (False in step S207), the recognition processing device 10 determines the discriminated vehicle as being exempt from a light-shielding target (step S209).

As described above, in the present embodiment, in a case where a light spot is detected in step S202, the determination is immediately made as a light shielding target. In addition, in a case where no light spot is detected in step S202, the determination as to the light shielding is made using a combination of the vehicle discrimination results in steps S203 and S204 and the ground speed result.

As a result, for example, even in a case where some of the delineators 202 and 203 as described in FIG. 5 are erroneously recognized as a vehicle in step S203, the determination can be made in step S209 that some of the delineators are exempt from a light-shielding target by checking the ground speed in step S206.

Therefore, it is possible to prevent erroneous switching to the low beam in a scene requiring the high beam irradiation as illustrated in FIG. 7.

In addition, even in a case where no light spot is detected in step S202 and no vehicle is discriminated in step S205 due to erroneous detection in rainy weather or the like in a scene where a preceding vehicle and an oncoming vehicle illustrated in FIG. 4 are present, the preceding vehicle 102 and the oncoming vehicle 101 can be recognized as light-shielding targets in step S208 by checking the ground speeds in step S207.

As a result, even in a case where it is difficult to detect a light spot and discriminate a vehicle on an image, the preceding vehicle 102 and the oncoming vehicle 101 can be reliably recognized as light shielding targets, and daze can be prevented by using the ground speeds.

Further, the vehicle detection unit 17 according to the present embodiment can detect a vehicle more accurately by detecting the vehicle using machine learning by a learned discriminator or the like. Thus, the accuracy of controlling the headlights becomes higher.

As described above, according to the present embodiment, similarly to the first embodiment, the emission of a high beam to another vehicle that should not be irradiated can be prevented.

Further, in the present embodiment, in a case where the light spot detection and vehicle detection are performed and the emission of the headlights of the self-vehicle is determined based on the detection results, appropriate control can be performed even in a case where each recognition result indicates non-detection. That is, in the present embodiment, the ground speed is acquired for an object around the self-vehicle, and the emission of the headlights of the self-vehicle is controlled in a case where the ground speed is greater than or equal to the threshold. As a result, even in a case where the light spot detection and vehicle detection on an image are difficult due to disturbance such as rainy weather, the emission of the headlights can be controlled using the ground speeds.

In the present embodiment, even in a case where the presence of a vehicle is recognized as a result of the vehicle detection, the ground speed of an object is acquired, and when the ground speed is less than a threshold, the determination is made that the object is a roadside object. As a result, according to the present embodiment, even when the roadside object is erroneously detected as a vehicle, the self-vehicle can travel with a high beam being maintained without shielding the roadside object from emission of a high beam from the self-vehicle headlights.

Furthermore, in the present embodiment, the vehicle detection unit 17 detects a vehicle based on the parallax information on the image and the feature of the image using machine learning. Accordingly, the vehicle detection unit 17 can detect a vehicle more accurately. However, using the machine learning is an example, and a vehicle may be detected with other methods.

### [Modifications]

Note that the above-described embodiments have been described in detail for easy understanding of the present invention, and the present invention is not necessarily limited to the invention having all the described configurations.

For example, the values of 40 Km/h and 80 Km/h as the examples of the threshold speeds described in the above-described embodiments are examples, and a higher speed or a lower speed may be used. For example, when the accuracy of the speed acquired by the ground speed acquisition unit 13 is high and the error is small, the speed values of the threshold 40 Km/h in the first embodiment and the threshold a of 40 Km/h in the second embodiment may be set to smaller speed values. In addition, these thresholds may be variably set depending on the traveling speed of the self-vehicle.

In each of the embodiments described above, the discrimination processing between a traveling vehicle and other objects in the flowcharts of FIGS. 2 and 7 is applied to the light distribution control of the headlights. However, the recognition result in recognition processing device 10 may also be used for control other than the control over the headlights in the vehicle control device 20.

For example, in a case where the vehicle control device 20 performs control as an autonomous driving system (AD) or an advanced driver-assistance system (ADAS), the recognition processing device 10 can perform the light distribution control over the headlights by executing the discrimination processing between a traveling vehicle and other objects. Further, the AD and ADAS can be one of pieces of information necessary for the vehicle recognition processing.

In this way, by applying the recognition result in the recognition processing device 10 to control other than the light distribution control over the headlights, autonomous driving and advanced driver-assistance can be perform more accurately.

In the configuration diagrams illustrated in FIGS. 1 and 6, control lines and information lines that are considered to be necessary for the description are indicated, and not all control lines and information lines on a product are indicated. In practice, it may be considered that almost all the configurations are connected to each other.

In the examples described in the present embodiments, the vehicle control device 20 that has acquired the recognition result in recognition processing device 10 controls the headlights. On the other hand, a part or entire parts of the recognition processing may be executed by the vehicle control device 20. Alternatively, the recognition processing device 10 may directly control the high beam and low beam of the headlights and the setting of the light shielding range at the time of the high beam.

Further, in a case where the recognition processing device 10 and the vehicle control device 20 are configured by an information processing device such as a computer, the programs for implementing the recognition processing device 10 and the vehicle control device 20 may be prepared in a nonvolatile storage or a memory in the computer, or may be transferred and used in a recording medium such as an external memory, an integrated circuit (IC) card, a secure digital (SD) card, or an optical disk.

### Reference Signs List

- 1, 1': light distribution control system
- 10: recognition processing device
- 11: central processing unit (CPU)
- 11a: read-only memory (ROM)
- 11b: random-access memory (RAM)
- 11c: network interface
- 11d: input unit
- 11e: output unit
- 12: storage device
- 13: ground speed acquisition unit
- 14: external sensor
- 15: image acquisition unit
- 16: light spot detection unit
- 17: vehicle detection unit
- 20: vehicle control device
- 21: light distribution control unit
- 100a, 100b: image
- 101: oncoming vehicle
- 102: preceding vehicle
- 103: street lamp
- 104: sign
- 200a, 200b: image
- 201: sign
- 202, 203: delineator

## Claims

1. A light distribution control system that performs vehicle-external recognition and performs light distribution control over headlights mounted on a vehicle, based on the vehicle-external recognition, the light distribution control system comprising:
an external sensor that acquires information about an object around the vehicle; and
a ground speed acquisition unit that acquires a ground speed of the object based on an output from the external sensor,
wherein based on the ground speed acquired by the ground speed acquisition unit, an emission range of the headlights is variably set.

2. The light distribution control system according to claim 1, wherein in a case where the ground speed of the object is less than a first threshold in the ground speed acquisition unit, an emission direction of headlights of a self-vehicle is set to a high beam.

3. The light distribution control system according to claim 1, further comprising:
an image acquisition unit that acquires an image of a periphery of the vehicle; and
a light spot detection unit that detects a light spot included in the image,
wherein the emission direction of the headlights of the self-vehicle is set to a low beam or a high beam for shielding the object from light in a case where the light spot detection unit detects no light spot and the ground speed acquisition unit acquires the ground speed of the object greater than or equal to a first threshold.

4. The light distribution control system according to claim 3, further comprising
a vehicle detection unit that detects a vehicle included in the image,
wherein the ground speed of the object is determined to be greater than or equal to the first threshold in the ground speed acquisition unit in a case where the vehicle detection unit detects no vehicle.

5. The light distribution control system according to claim 4, wherein the emission direction of the headlights of the self-vehicle is set to the low beam or the high beam for shielding the object from light in a case where the vehicle detection unit detects the vehicle and the ground speed acquisition unit acquires the ground speed of the object greater than or equal to a second threshold of a speed greater than the first threshold.

6. The light distribution control system according to claim 4, wherein the vehicle detection unit detects a vehicle using machine learning based on parallax information and feature on the image.

7. The light distribution control system according to claim 1, wherein the ground speed acquisition unit also uses information about the ground speed of the object as object information for performing autonomous driving or advanced driver-assistance of the vehicle.

8. A light distribution control method for performing vehicle-external recognition and performing light distribution control over headlights mounted on a vehicle, based on the vehicle-external recognition, the light distribution control method comprising:
acquiring information about an object around the vehicle in external sensing processing;
acquiring a ground speed of the object in ground speed acquisition processing based on the information acquired in the external sensing processing; and
variably setting an emission range of the headlights in light distribution control processing based on the ground speed acquired in the ground speed acquisition processing.
